(19) Europäisches Patentamt
European Patent Office
Office européen des brevets

(11) **EP 1 913 058 B1**

(12) **EUROPÄISCHE PATENTSCHRIFT**

(45) Veröffentlichungstag und Bekanntmachung des Hinweises auf die Patenterteilung:
**29.10.2008   Patentblatt 2008/44**

(21) Anmeldenummer: **06777680.7**

(22) Anmeldetag: **11.07.2006**

(51) Int Cl.:
*C08G 65/26* *(2006.01)*

(86) Internationale Anmeldenummer:
**PCT/EP2006/064074**

(87) Internationale Veröffentlichungsnummer:
**WO 2007/009905 (25.01.2007 Gazette 2007/04)**

(54) **VERFAHREN ZUR HERSTELLUNG VON POLYETHERALKOHOLEN**

METHOD FOR PRODUCING POLYETHER ALCOHOLS

PROCEDE POUR PRODUIRE DES POLYETHER-ALCOOLS

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.07.2005   DE 102005034001**

(43) Veröffentlichungstag der Anmeldung:
**23.04.2008   Patentblatt 2008/17**

(73) Patentinhaber: **BASF SE**
**67056 Ludwigshafen (DE)**

(72) Erfinder:
• **HERWIG, Stephan**
  **67454 Hassloch (DE)**

• **OSTROWSKI, Thomas**
  **68199 Mannheim (DE)**
• **MECKELNBURG, Dirk**
  **67063 Ludwigshafen (DE)**
• **LÖFFLER, Achim**
  **67346 Speyer (DE)**
• **JOVANOVIC, Renata**
  **67061 Ludwigshafen (DE)**
• **WEINLE, Werner**
  **74177 Bad Friedrichshall (DE)**

(56) Entgegenhaltungen:
**EP-A- 1 469 027          WO-A-01/62825**
**WO-A-03/025045**

**Beschreibung**

Gegenstand der Erfindung ist ein kontinuierliches Verfahren zur Herstellung von Polyetheralkoholen durch Polymerisation von Alkylenoxiden unter Verwendung von Multimetallcyanidverbindungen als Katalysatoren.

Polyetheralkohole sind seit langem bekannt und werden in großen Mengen technisch hergestellt. Zumeist werden sie als Ausgangsverbindung zur Herstellung von Polyurethanen durch Umsetzung mit Polyisocyanaten verwendet.

Als Katalysatoren zur Herstellung von Polyetheralkoholen werden in jüngerer Zeit häufig Multimetallcyanidverbindungen, auch als DMC-Katalysatoren bezeichnet, eingesetzt. Durch den Einsatz von DMC-Katalysatoren wird der Gehalt an ungesättigten Nebenprodukten minimiert, außerdem verläuft die Umsetzung, verglichen mit den üblichen basischen Katalysatoren, mit einer deutlich höheren Raum-Zeit-Ausbeute.

Ein weiterer Vorteil der DMC-Katalysatoren ist die sogenannte differentielle Katalyse. Darunter ist zu verstehen, dass bei der Reaktion die Alkylenoxide vorzugsweise an Moleküle mit geringer Molmasse angelagert werden. Das ermöglicht die kontinuierliche Herstellung von Polyetheralkoholen in ideal durchmischten Reaktoren.

Auch Verfahren zur kontinuierlichen Herstellung von Polyetheralkoholen unter Verwendung von DMC-Katalysatoren sind bekannt. So beschreibt WO 98/03571 ein Verfahren zur kontinuierlichen Herstellung von Polyetheralkoholen mittels DMC-Katalysatoren, bei dem in einem kontinuierlichen Rührkessel zunächst eine Mischung aus einem Starter und einem DMC-Katalysator vorgelegt, der Katalysator aktiviert und zu dieser aktivierten Mischung kontinuierlich weiterer Starter, Alkylenoxide und DMC-Katalysator gegeben und, nach Erreichen des angestrebten Füllstands des Reaktors, kontinuierlich Polyetheralkohol abgezogen wird.

In JP H6-16806 wird ein Verfahren zur kontinuierlichen Herstellung von Polyetheralkoholen mittels DMC-Katalysatoren ebenfalls in einem kontinuierlichen Rührkessel oder in einem Rohrreaktor beschrieben, bei dem eine aktivierte Startsubstanzmischung am Eingang vorgelegt und an verschiedenen Punkten des Rohrreaktors Alkylenoxid zudosiert wird.

Auch in DD 203 725 wird ein Verfahren zur kontinuierlichen Herstellung von Polyetheralkoholen mittels DMC-Katalysatoren beschrieben, bei dem in einem Rohrreaktor eine aktivierte Startsubstanzmischung am Eingang vorgelegt und an verschiedenen Punkten des Rohrreaktors Alkylenoxid zudosiert wird.

In WO01/62826, WO01/62824 und WO01/62825 werden spezielle Reaktoren für das kontinuierliche Verfahren zur Herstellung von Polyetheralkoholen mittels DMC-Katalysatoren beschrieben.

Ein Problem bei der kontinuierlichen Herstellung von Polyetheralkoholen unter Verwendung von DMC-Katalysatoren ist die Anwesenheit von nicht umgesetztem Alkylenoxid im Austrag der kontinuierlichen Reaktoren. Diese werden zumeist durch Strippen aus dem Polyetheralkohol entfernt.

Dadurch kommt es, insbesondere bei der großtechnischen Herstellung von Polyetheralkoholen, zu beträchtlichen Produktverlusten, welche die Wirtschaftlichkeit des Verfahrens beeinträchtigen.

Zur Lösung dieses Mangels wird in WO 03/025045 vorgeschlagen, den Austrag aus dem kontinuierlichen Reaktor durch einen Rohrreaktor zu leiten, in den kein Alkylenoxid dosiert wird. Am Ende dieses Rohrreaktors ist das freie Alkylenoxid abreagiert, und der resultierende Polyetheralkohol ist im wesentlichen monomerfrei.

Nachteilig an diesem Verfahren ist, dass der Rohrreaktor, um die Umsetzung des gesamten freien Alkylenoxids zu gewährleisten, sehr lang ausgelegt sein muss. Außerdem ist die Durchmischung im Rohrreaktor häufig unzureichend. Die Wärmeabfuhrleistung eines Rohrreaktors reicht nicht aus, um im ersten Abschnitt mit hohen Alkylenoxidkonzentrationen Temperaturspitzen, die zu Produktschädigungen führen zu vermeiden.

Um die Temperatur im Rohrreaktor konstant zu halten ist insbesondere im vorderen Reaktorteil eine Kühlung notwendig, damit das Produkt aufgrund der Temperaturerhöhung nicht geschädigt wird.

Die notwendigen Verweilzeiten sind weiterhin sehr hoch, so dass, zur Gewährleistung von plug-flow-Verhalten, was geringe Reaktordurchmesser zur Folge hat, sehr lange Reaktoren resultieren

Nachteilig an diesem Verfahren ist weiterhin, dass eine optimale fluiddynamische Auslegung des Rohrreaktors oft nicht möglich ist. Um die Umsetzung des gesamten freien Alkylenoxides zu gewährleisten wird eine bestimmte hydrodynamische Verweilzeit benötigt. Diese wird über ein ausreichend großes Volumen zur Verfügung gestellt. Ein großes Volumen lässt sich entweder über einen großen Durchmesser oder über ein große Länge realisieren.

In einem Rohr mit einem großen Durchmesser ist die Strömungsgeschwindigkeit gering. Geringe Strömungsgeschwindigkeiten führen ab dem Unterschreiten kritischer Reynolds-Zahlen zu einer axialen Rückvermischung und somit zu undefinierten Verweilzeitverteilungen. Die Verweilzeitverteilung des Apparates entspricht schließlich nicht mehr der für die Reaktion erforderlichen idealen Rohrcharakteristik. Darüber hinaus sinkt mit der Strömungsgeschwindigkeit der spezifische Impulseintrag, das Dispergieren von Partikeln wird zunehmend schlechter.

Wird das benötigte Reaktionsvolumen hingegen über eine große Rohrlänge realisiert, können sich konstruktive Schwierigkeiten ergeben. Sind beispielsweise Temperaturunterschiede in axialer Richtung in dem Rohr zu erwarten, kann nur in einer senkrechten Bauweise eine Entmischung verhindert werden.

Aufgabe der Erfindung war es, ein Verfahren zur kontinuierlichen Herstellung von Polyetheralkoholen unter Verwendung von DMC-Katalysatoren zu entwickeln, bei dem die Verluste an Alkylenoxid minimiert werden, das kompakt ausgelegt werden kann und das betriebssicher arbeitet.

Die Aufgabe konnte überraschenderweise gelöst werden durch die Verwendung eines Reaktors, der durch gegeneinander verschlossene Böden in voneinander getrennte Abschnitte, sogenannte Kompartments, unterteilt ist, die durch externe Rohrleitungen miteinander verbunden sind, im Anschluss an den kontinuierlichen Reaktor.

Gegenstand der Erfindung ist demzufolge ein Verfahren zur kontinuierlichen Herstellung von Polyetheralkoholen unter Verwendung von DMC-Katalysatoren, dadurch gekennzeichnet, dass in einem ersten Schritt in einem kontinuierlich arbeitenden Reaktor Alkylenoxide an H-funktionelle Startsubstanzen angelagert werden und der Austrag dieses Reaktors in einen Reaktor überführt werden, der durch gegeneinander verschlossene Böden in getrennte Abschnitte, sogenannte Kompartments, unterteilt ist, die durch externe Rohrleitungen miteinander verbunden sind, in dem der Austrag des Reaktors vom ersten Schritt der Reaktion die Kompartments nacheinander durchläuft, und dass in den in Kompartments unterteilten Reaktor kein Alyklenoxid dosiert wird.

Dieser zweite Reaktor wird im folgenden als Kompartmentreaktor bezeichnet. Er ist vorzugsweise zylindrisch, wobei die Länge des Apparates größer als der Durchmesser ist. Der Apparat kann sowohl liegend als auch senkrecht stehend konzipiert werden. Die Trennwände sind vorzugsweise senkrecht zur Behälterwand im Zylinder angebracht. Die einzelnen Kompartments haben vorzugsweise das gleiche Volumen.

In diesen Reaktor wird, abgesehen von dem im Austrag des Reaktors vom ersten Schritt des Verfahrens befindlichen Alkylenoxid, kein Alkylenoxid dosiert, so dass es dort zu einer vollständigen Abreaktion des im Austrag des Reaktors vom ersten Schritt des Verfahrens befindlichen Alkylenoxids kommt.

Der Kompartmentreaktor kann im einfachsten Fall zwei Kompartments enthalten. Vorzugsweise weist der Kompartementreaktor mindestens 2 und nicht mehr als 10 Kompartements auf. Insbesondere weist der Kompartmentreaktor 4 bis 10 Kompartments auf. Die Anzahl und das Volumen der Kompartments wird dabei so bemessen, dass eine vollständige Abreaktion des nicht umgesetzten Alkylenoxids gewährleistet ist und das den Kompartmentreaktor verlassende Produkt frei von nicht reagiertem Alkylenoxid ist.

Die Edukte werden über Rohrleitungen von einem in das jeweils nachgeschaltete Kompartement überführt. Am Ende jeder Rohrleitung, d.h. am Eintritt jedes Kompartments, kann das Zulaufrohr düsenartig verjüngt werden. Werden die Edukte über eine oder auch mehrere Düse in das Kompartment eingebracht, wird Energie in das jeweilige Kompartement eingetragen.. Diese Energie kann zu einer Vermischung der Fluide in den Kompartments genutzt werden. Jede Düse erzeugt bei dieser Anordnung einen Druckverlust von zwischen 1 mbar und 10 bar. So wird in jedes Kompartment eine spezifische Energie zwischen. 0,5 W/m$^3$ und 3000 W/m$^3$ eingetragen. Diese errechnet sich nach folgender Formel:

$$\frac{P}{V} = \Delta p_{D\ddot{u}se} \bullet \dot{V}$$

mit

P/V = spezifische Leistung,
$\Delta p_{D\ddot{u}se}$ = Druckverlust Düse
$\dot{V}$ = Volumenstrom der Flüssigkeit

Werden Düsen oder düsenartige Leitungsverengungen genutzt, so ist es besonders vorteilhaft, diese in jedem Kompartment möglichst bodennah anzuordnen. Der Düsenstrahl sollte dabei senkrecht oder schräg aufwärts gerichtet sein.

Durch ein zentral in jedes Kompartment eingeführtes Rohr oder auch durch einen Verteilerring oder ähnliches wird die Flüssigkeit nach erfolgter Vermischung dem Kompartment wieder entnommen und beispielsweise über eine Düse dem nächsten Kompartment zugeführt. Nach dem letzten Kompartment wird der Polyetheralkohol, gegebenenfalls nach einer Aufarbeitung, dem Lagertank zugeführt. Vor dem Einsatz der Polyetheralkohole ist es üblich, diesem übliche Stabilisatoren gegen thermischen und oxidativen Abbau zuzusetzen.

Jedes Kompartment hat die Verweilzeitcharakteristik eines Rührkessels. Der gesamte Kompartmentreaktor besitzt die Verweilzeitverteilung einer Rührkesselkaskade. Gegenüber einer Rührkesselkaskade hat der Kompartmentreaktor insbesondere den Vorteil, dass er ohne bewegte Teile auskommt. Dadurch ist ein konstruktiv sehr einfacher und kompakter Aufbau des Reaktors möglich.

Der aus dem kontinuierlichen Reaktor entnommene Polyetheralkohol wird vorzugsweise von einer einzigen Pumpe am Eingang des Reaktors durch alle Kompartments gedrückt Es ist auch möglich, zwischen einzelnen Kompartments Pumpen zu installieren.

Bei Verwendung einer einzigen Pumpe am Reaktoreintritt muss diese den gesamten Druckverlust des Reaktors aufbringen. Dadurch ist in diesem Fall der Druck im ersten Kompartment am höchsten. Dies ist vorteilhaft, da hier die größte Menge an freiem Alkylenoxid zu erwarten ist, die im Kompartmentreaktor abreagieren sollen. Die Reaktorauslegung kann bei dieser Ausgestaltung so erfolgen, dass die Bildung einer zusammenhängenden Gasphase vermieden wird.

Die Kompartments sind durch externe Rohrleitungen miteinander verbunden. In diesen externen Rohrleitungen können Wärmetauscher installiert werden, beispielsweise Rohrbündel- oder Plattenwärmetauscher. Über die Wärmetauscher kann die Temperatur in den Kompartments eingestellt werden. Dabei kann die Temperatur in allen Kompartments gleich oder in den unterschiedlichen Kompartments unterschiedlich eingestellt werden.

Der Reaktor kann adiabat, isotherm oder polytrop betrieben werden. Die adiabate Reaktionsführung stellt die einfachste Realisierung dar, denn in diesem Fall sind die externen Wärmetauscher nicht notwendig. Statt dessen werden die Produktströme lediglich außen herum geleitet. Die Reaktionstemperatur wird innerhalb des Reaktors ansteigen und am Reaktorende ihr Maximum erreichen. Im isothermen Fall wird durch externe Wärmetauscher gewährleistet, dass die Temperaturen in allen Kompartments identisch sind. Die polytrope Reaktionsführung stellt einen Zwischenfall der beiden oben genannten Extrema dar.

Im vorliegenden Fall bietet sich prinzipiell die adiabate Temperaturführung an. Allerdings muss gewährleistet werden, dass am Ende des Reaktors die maximal zulässige Produkttemperatur (ca. 150˚C) nicht überschritten wird. Wird von einer Produkteintrittstemperatur von ca. 130˚C und einer adiabeten Temperaturerhöhung durch die Abreaktion des Propylenoxids von ca. 7 K / $\%_{PO}$ ausgegangen, so ergibt sich, dass im Reaktionsgemisch maximal ca. 3 % nicht reagiertes Propylenoxid vorliegen dürfen. Wird dieser Wert überschritten, so muss eine Produktkühlung stattfinden. Die Konzentration nicht reagierten Alkylenoxids hängt von der Reaktionsführung im vorangeschalteten Reaktor ab, wie Katalysatorkonzentration, Verweilzeit, und/oder Reaktionstemperatur.

In einer besonderen Ausführungsform des Reaktors können die ersten Kompartments mit Wärmeabfuhrsystemen ausgestattet sein, die übrigen Kompartments dagegen können adiabat betrieben werden.

Wie ausgeführt, sind die Kompartments durch verschlossene Böden voneinander abgeteilt. Zum Befüllen und Entleeren können die Böden mit kleinen Löchern versehen werden. Es können auch Rohrleitungen als By-Pässe zwischen den Kompartments installiert werden. Um einen bestimmungsgemäßen Betrieb über die äußeren Wärmetauscher und die Düsen zu gewährleisten, muss der Druckverlust in diesen Löchern oder By-Pässen groß bzw. die Querschnittsfläche klein gegenüber der der Kompartment-Düsen sein.

Der Kompartmentreaktor kann stehend oder liegend betrieben werden. Bei stehendem Betrieb kann der Polyetheralkohol von unten nach oben als auch von oben nach unten betrieben werden. Auch ein liegender Apparat ist möglich.

Bei einem stehenden Betrieb ist zu vermeiden, dass eine zusammenhängende Gasphase im Reaktor auftritt. Dies würde zu einem Fluten des Reaktors mit Gas führen. In einem liegenden Apparat besteht diese Gefahr nicht.

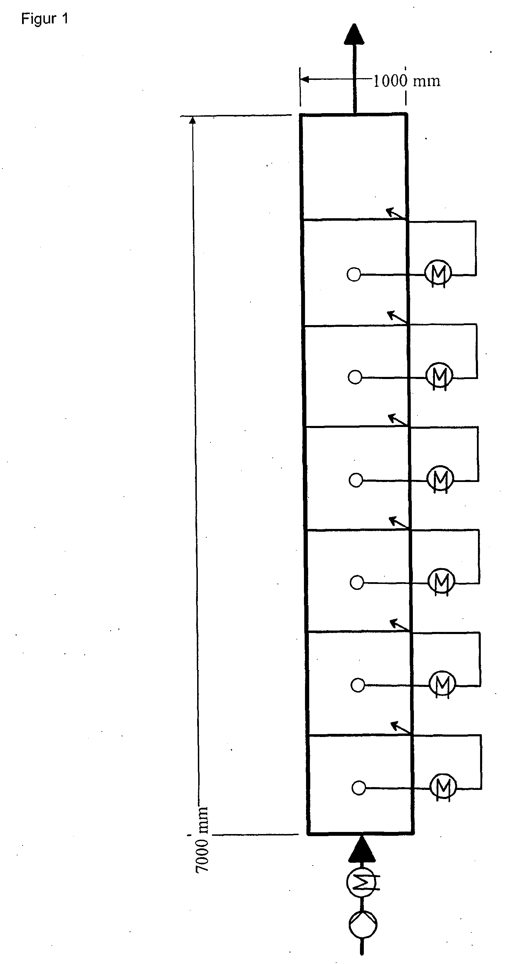

Figur 1 zeigt einen Kompartmentreaktor der aus 7 Kompartments (1) besteht. Der Reaktor ist kreisrund und hat eine Länge von 7000 mm und einen Durchmesser von 1000 mm. Der Polyetheralkohol wird über eine Pumpe (2) in das erste Kompartment (1) befördert. Über ein zentral in jedes Kompartment eingeführtes externes Rohr (3) wird der Polyetheralkohol nach erfolgter Vermischung dem Kompartment wieder entnommen, in das jeweils nächste Kompartment befördert und über eine Düse (4) eingedüst. An den externen Rohren sind Wärmetauscher (5) angebracht. Am Ende des Reaktors wird der Polyetheralkohol aus dem Reaktor entnommen

Die kontinuierliche Anlagerung des Alkylenoxids in der ersten Stufe des Verfahrens kann nach bekannten Verfahren erfolgen.

Als Reaktoren können für die erste Stufen des Verfahrens kontinuierlich arbeitende Rührkessel, Rohrreaktoren oder Strömungs- beziehungsweise Schlaufenreaktoren zum Einsatz kommen.

Derartige Reaktoren sind beispielsweise in JP H6-16806, DD 207 253, WO 01/62826, WO 01/62825 und WO 01/62824 beschrieben.

In einer bevorzugten Ausführungsform des erfindungsgemäßen Verfahrens werden in der ersten Stufe des Verfahrens kontinuierlich arbeitende Rührkessel eingesetzt. Vorzugsweise wird ein Rührkessel mit außenliegendem Wärmetauscher, wie zum Beispiel in WO 01/62825 beschrieben, eingesetzt.

In WO 01/62824 wird ein Rührkesselreaktor mit innenliegenden Wärmetauscherplatten beschrieben. Auch dieser Reaktortyp ist einsetzbar.

Neben herkömmlichen Rührkesselreaktoren können auch Strahlschlaufenreaktoren mit Gasphase und externen Wärmetauschern, wie beispielsweise in EP 419419 beschrieben, oder internen Wärmetauscherrohren, wie in WO 01/62826 beschrieben, verwendet werden. Darüber hinaus können gasphasenfreie Loop-Reaktoren eingesetzt werden.

Bei der Dosierung der Edukte ist eine gute Verteilung der Edukte, d.h. der Alkylenoxide, Starter und Katalysatorsuspension notwendig. Dies kann bei Rührkesselreaktoren durch die Verwendung von Ringverteilern geschehen, die unterhalb des Rührers oder zwischen die erste und die zweite Rührerebene eingebaut werden

Bei dem erfindungsgemäßen Verfahren werden üblicherweise die Startsubstanz, das Alkylenoxid und der Katalysator und kontinuierlich in den Reaktor dosiert und das Reaktionsprodukt kontinuierlich entnommen. Danach wird es, wie ausgeführt, über eine Pumpe kontinuierlich dem Kompartmentreaktor zugeführt.

In einer Ausführungsform des erfindungsgemäßen Verfahrens schließt sich an den ersten kontinuierlichen Reaktor mindestens ein weiterer kontinuierlicher Reaktor an. In diesem Reaktor wird vorzugsweise ein anderes Alkylenoxid bzw. eine andere Mischung aus mindestens zwei Alkylenoxiden angelagert als im ersten kontinuierlichen Reaktor. Der Austrag aus diesem zweiten Reaktor wird, wie oben beschrieben, dem Kompartmentreaktor zugeführt

Das Produkt wird üblicherweise nach der Entnahme aus dem Kompartmentreaktor aufgearbeitet. Zur Aufarbeitung gehört beispielsweise die Entfernung von leicht flüchtigen Bestandteilen, üblicherweise durch Vakuumdestillation, Wasserdampf- oder Gasstrippen und oder andere Methoden der Desodorierung. Falls erforderlich, kann auch eine Filtration erfolgen. Die Entfernung leichtflüchtiger Nebenkomponenten kann sowohl chargenweise als auch kontinuierlich erfolgen. Bei dem vorliegenden Verfahren ist eine kontinuierliche Entfernung der Geruchsstoffe bevorzugt. Dies kann beispielsweise mittels Dampfstrippen in einer Kolonne mit anschließendem Zwangsumlaufverdampfer zur Abtrennung des Restwassers geschehen.

Es ist möglich, den Katalysator aus dem fertigen Polyetheralkohol zu entfernen, insbesondere durch Filtration. Für die meisten Einsatzgebiete kann er jedoch im Polyetheralkohol verbleiben.

Weiterhin ist es üblich, den Polyetheralkohol gegen den thermooxidativen Abbau zu stabilisieren. Dies erfolgt zumeist durch den Zusatz von Stabilisatoren, vorzugsweise sterisch gehinderten Phenolen und/oder Aminen. Zur Reduzierung des Geruchs der Polyole kann auf den Einsatz von aminischen Stabilisatoren verzichtet werden.

Als Startsubstanzen zur Herstellung der Polyetheralkohole kommen H-funktionelle Verbindungen zum Einsatz. Insbesondere werden Alkohole mit einer Funktionalität von 1 bis 8, vorzugsweise 2 bis 8, eingesetzt. Zur Herstellung von Polyetheralkoholen, die für Polyurethan-Weichschaumstoffe eingesetzt werden, kommen als Startsubstanzen insbesondere Alkohole mit einer Funktionalität von 2 bis 6, insbesondere von 2 und 3, zum Einsatz. Beispiele sind Glyzerin, Diglyzerin, Butandiol, Diethylenglykol, Triethylenglykol, Dipropylenglykol, Tripropylenglykol, Sorbitol, Trimethylolpropan und Rizinusöl. Bei der Anlagerung der Alkylenoxide mittels DMC-Katalysatoren ist es vorteilhaft, zusammen mit oder an Stelle von den genannten Alkoholen deren Umsetzungsprodukte mit Alkylenoxiden, insbesondere Propylenoxid, einzusetzen. Derartige Verbindungen haben vorzugsweise eine Molmasse bis 500 g/mol. Die Anlagerung der Alkylenoxide bei der Herstellung dieser Umsetzungsprodukte kann mit beliebigen Katalysatoren erfolgen, beispielsweise mit basischen Katalysatoren. Die Polyetheralkohole für die Herstellung von Polyurethan-Weichschaumstoffen haben zumeist eine Hydroxylzahl im Bereich zwischen 5 und 400 mgKOH/g, vorzugsweise 35 und 60 mgKOH/g.

Die Anlagerung der Alkylenoxide in der ersten Stufe des Verfahrens erfolgt bei den üblichen Bedingungen, bei Temperaturen im Bereich von 60 bis 180°C, bevorzugt zwischen 90 bis 140°C, insbesondere zwischen 100 bis 130°C und Drücken im Bereich von 0 bis 20 bar, bevorzugt im Bereich von 0 bis 10 bar und insbesondere im Bereich von 0 bis 5 bar. Die beiden Verfahrensschritte des erfindungsgemäßen Verfahrens können bei identischen oder verschiedenen Temperaturen ausgeführt werden. Die im Reaktor zum Reaktionsstart vorgelegte Mischung aus Startsubstanz und DMC-Katalysator kann vor Beginn der Dosierung der Alkylenoxide gemäß der Lehre von WO 98/52689 durch Strippen vorbehandelt werden.

Die für das erfindungsgemäße Verfahren eingesetzten DMC-Katalysatoren sind bekannt und beispielsweise in EP 743 093, EP 755 716, EP 862 947, EP 862 997 oder EP 1 021 453 beschrieben. Die Katalysatoren können amorph oder kristallin sein. Unter den kristallinen DMC-Katalysatoren sind solche mit einer monoklinen Kristallstruktur bevorzugt.

Der Katalysator wird vorzugsweise in einer Menge von 15 bis 100 ppm, insbesondere in einer Menge von 20 bis 80 ppm, jeweils bezogen auf die Gesamtmasse des Polyetheralkohols, eingesetzt.

Wie ausgeführt, werden die nach dem erfindungsgemäßen Verfahren hergestellten Polyetheralkohole vorzugsweise zur Herstellung von Polyurethanen, insbesondere zur Herstellung von Polyurethan-Weichschaumstoffen, eingesetzt. Dazu werden sie, gegebenenfalls im Gemisch mit anderen Verbindungen mit mindestens zwei mit Isocyanatgruppen reaktiven Wasserstoffatomen und in Anwesenheit von Katalysatoren Treibmitteln und gegebenenfalls üblichen Hilfs- und/oder Zusatzstoffen mit Polyisocyanaten umgesetzt.

Die Erfindung soll an dem nachfolgenden Beispiel näher erläutert werden.

Die oben beschriebene Erfindung soll an folgendem Beispiel beschrieben werden.

Beispiel

a) Katalysatorherstellung

Zunächst wurde nach bekannter KOH-Technologie ein mit Glyzerin gestartetes Propoxylat hergestellt. In einen 30 L Reaktor wurden 1,85 kg Glyzerin vorgelegt. Anschließend wurden 125 g wässrige KOH (48 %ig) dosiert und das Reaktionsgemisch im Vakuum bei 120°C von Wasser befreit (Wasserwert: < 0,9 %). Anschließend wurden binnen 8 Stunden bei 120°C 18,1 kg Propylenoxids dosiert. Das Produkt wurde anschließend mit Macrosorb (5 % Macrosorb, 1 % Wasser) bei 90°C aufgearbeitet und das Macrosorb anschließend abfiltriert. Das Produkt besaß eine OH-Zahl von 171,5 mg KOH/g. Eine Alkalität war nicht nachweisbar (< 1 ppm).

In dieses Propoxylat wurde anschließend DMC-Katalysator, hergestellt gemäß der Lehre von EP 862947, gegeben. Der getrocknete Katalysator wurde in dem oben beschriebenen Propoxylat suspendiert und unter Verwendung eines Ultra-Turrax fein im Propoxylat verteilt. Anschließend wurde die Suspension im Vakuum bei 120°C getrocknet (Wasserwert: < 0,02 %). Die Konzentration an DMC in der Suspension lag bei 5,1 % (ermittelt über die Zn/Co-Gehalte).

b) Herstellung von Starter-Polyol

Das bereits oben beschriebene Propoxylat (OH-Zahl 171,5 mg KOH/g) wurde in einem semi-batch Reaktor zu einem Weichschaumpolyol umgesetzt. Hierzu wurden 5,6 kg des Propoxylats vorgelegt. Anschließend wurden 39 g der DMC-Suspension zudosiert. Das Reaktionsgemisch wurde bei 120°C getrocknet (Wasserwert < 0,02 %). Anschließend wurden parallel 1,44 kg Ethylenoxid und 12,95 kg Propylenoxid bei 120°C dosiert. Das Endprodukt hatte eine OH-Zahl von 48,6 mg KOH/g.

c) Kontinuierliche Reaktionsführung

Die Apparatur für die kontinuierliche Reaktionsführung bestand aus einem 1,5L Rührkesselreaktor mit Mantelkühlung. Der Reaktordeckel war mit Zuläufen für Alkylenoxide, Starter (Glyzerin), DMC-Suspension und Polyol (für die Vorlage) ausgestattet. Alle Zuläufe wurden über Dosierpumpen kontrolliert. Am Reaktorausgang wurde eine Zahnradpumpe gefolgt von einem Massendurcflußmesser verwendet, um das Produkt kontinuierlich aus dem Reaktor zu entfernen und den Füllstand im Reaktor (ca. 80 %, entsprechend 1,2l Flüssigkeitsvolumen) konstant zu halten. An den Rührkesselreaktor schloss sich der erfindungsgemäße Kompartmentreaktor mit 0,8 l Gesamtvolumen an. Der Nachreaktor war in 7 Kompartments mit einer Höhe von jeweils 53 mm unterteilt und hatte einen Durchmesser von ebenfalls 53 mm (H : D Kompartment = 1). In jedem Kompartment war eine Düse, bestehend aus einem 20 mm langen Rohr DN 6 und einer 2 mm starken Blende mit einem Durchmesser 0,1 mm, eingebaut. Austragsseitig war am Kompartmentreaktor ein Regelventil eingebaut, das den Druck im Reaktor konstant hielt. Der Austrag erfolgte in ein evakuiertes Sammelgefäß.

Die Anlage wurde über ein Prozessleitsystem kontrolliert. Die wie oben beschrieben hergestellte Katalysatorsuspension wurde auf eine Konzentration von 0,2 % verdünnt.

Der Rührkessel wurde mit dem oben beschriebenen Produkt gefüllt (Füllgrad 80 %) und auf 130°C aufgeheizt. Der Kompartmentreaktor wurde ebenfalls auf 130°C aufgeheizt. Anschließend wurde die Katalysatordosierpumpe zugeschaltet, bis sich eine rechnerische DMC-Konzentration im Kessel von ca. 150 ppm ergab, und anschließend wieder abgeschaltet. Alle Zuläufe und Abläufe wurden gleichzeitig gestartet, wobei folgende Dosiergeschwindigkeiten eingestellt wurden: Glyzerin: 32,8 g/h, Ethylenoxid: 125 g/h, Propylenoxid: 1091,7 g/h, Katalysatorsuspension (0,2 %ig): 25 g/h, entsprechend einer mittleren Verweilzeit von 60 min im CSTR.

Die Reaktion sprang spontan, und binnen 3 h wurde ein stationärer Reaktorbetrieb erreicht (keine Änderung der OH-Zahl des Reaktionsprodukts im Sammelgefäß). Proben aus dem Ende des Kompartmentreaktors wiesen immer einen Gehalt an Propylenoxid von kleiner 200 ppm auf, der Gehalt an Ethylenoxid war unterhalb der Nachweisgrenze.

**Patentansprüche**

1. Verfahren zur kontinuierlichen Herstellung von Polyetheralkoholen unter Verwendung von DMC-Katalysatoren, **dadurch gekennzeichnet, dass** in einem ersten Schritt in einem kontinuierlich arbeitenden Reaktor Alkylenoxide an H-funktionelle Startsubstanzen angelagert werden und der Austrag dieses Reaktors einem zweiten Schritt in einen Reaktor überführt wird, der durch verschlossene Böden in voneinander getrennte Abschnitte, sogenannte Kompartments, unterteilt ist, die durch externe Rohrleitungen miteinander verbunden sind, in dem der Austrag des Reaktors vom ersten Schritt der Reaktion die Kompartments nacheinander durchläuft, und dass in den in Kompartments unterteilten Reaktor kein Alkylenoxid dosiert wird.

2. Verfahren nach Anspruch 1, **dadurch gekennzeichnet, dass** das Produkt durch eine Düse in das Kompartment eingedüst wird.

3. Verfahren nach Anspruch 1, **dadurch gekennzeichnet, dass** das Produkt durch ein zentral in jedes Kompartment eingeführtes Rohr dem Kompartment wieder entnommen und dem nächsten Kompartment zugeführt wird.

4. Verfahren nach Anspruch 1, **dadurch gekennzeichnet, dass** das Produkt von einer einzigen Pumpe am Eingang des Reaktors durch alle Kompartments gedrückt wird.

5. Verfahren nach Anspruch 1, **dadurch gekennzeichnet, dass** der in Kompartments unterteilte Reaktor 2 bis 10 Kompartments enthält.

6. Verfahren nach Anspruch 1, **dadurch gekennzeichnet, dass** die Kompartments das gleiche Volumen haben.

**Claims**

1. A process for continuously preparing polyether alcohols using DMC catalysts, which comprises, in a first step, in a continuous reactor, adding alkylene oxides onto H-functional starter substances and transferring the output of this reactor to a second step in a reactor which is divided by sealed plates into mutually separate sections, known as compartments, which are connected to one another by external pipelines, in which the output of the reactor from the first step of the reaction passes through the compartments in succession, and not metering any alkylene oxide into the reactor divided into compartments.

**2.** The process according to claim 1, wherein the product is sprayed into the compartment through a nozzle.

**3.** The process according to claim 1, wherein the product is withdrawn again from the compartment and fed to the next compartment through a tube inserted centrally into each compartment.

**4.** The process according to claim 1, wherein the product is forced through all compartments by a single pump at the inlet of the reactor.

**5.** The process according to claim 1, wherein the reactor divided into compartments comprises from 2 to 10 compartments.

**6.** The process according to claim 1, wherein the compartments have the same volume.

**Revendications**

**1.** Procédé de préparation en continu de poly(éther alcools) en utilisant des catalyseurs DMC, **caractérisé en ce que** dans une première étape, dans un réacteur fonctionnant en continu, des oxydes d'alkylène sont fixés à des substances de départ ayant des atomes H et, dans une seconde étape, les matières entraînées de ce réacteur sont transférées à un réacteur divisé en sections, appellées compartiments, séparées les unes des autres par des étages fermés, lesquelles sont connectées ensemble via des conduites externes, dans lequel les matières entraînées du réacteur de la première étape de réaction s'écoulent à travers les compartiments successifs, et **en ce que** dans le réacteur divisé en compartiments, aucun oxyde d'alkylène n'est dosé.

**2.** Procédé selon la revendication 1, **caractérisé en ce que** le produit est injecté dans le compartiment via une tuyère.

**3.** Procédé selon la revendication 1, **caractérisé en ce que** le produit est à nouveau récupéré via un conduit introduit centralement dans chaque compartiment et est délivré au compartiment suivant.

**4.** Procédé selon la revendication 1, **caractérisé en ce que** le produit est refoulé à travers tous les compartiments par une seule pompe située à l'entrée du réacteur.

**5.** Procédé selon la revendication 1, **caractérisé en ce que** le réacteur divisé en compartiments contient 2 à 10 compartiments.

**6.** Procédé selon la revendication 1, **caractérisé en ce que** les compartiments ont le même volume.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9803571 A
- JP H616806 B
- DD 203725
- WO 0162826 A
- WO 0162824 A
- WO 0162825 A
- WO 03025045 A
- DD 207253

- EP 419419 A
- WO 9852689 A
- EP 743093 A
- EP 755716 A
- EP 862947 A
- EP 862997 A
- EP 1021453 A